# EUROPÄISCHE PATENTSCHRIFT

(11) **EP 1 787 505 B1**
(45) Veröffentlichungstag und Bekanntmachung des Hinweises auf die Patenterteilung: **06.03.2013**
(21) Anmeldenummer: 06120757.7
(22) Anmeldetag: 15.09.2006
(51) Int. Cl.: A01F 15/08, A01F 15/07

(54) **Rundballenpresse**
Round baler
Presse à balles ronde

(30) Priorität: 17.11.2005 DE 102005055375; 18.08.2006 DE 202006012674 U
(43) Veröffentlichungstag der Anmeldung: 23.05.2007
(73) Patentinhaber: Usines CLAAS France S.A.S., 57148 St. Rémy/Woippy CEDEX (FR)
(72) Erfinder: Guthmann, Peter, 57000 Metz (FR)

(56) Entgegenhaltungen:
- DE-A1- 3 330 757
- DE-A1- 10 011 158
- FR-A1- 2 397 144
- US-A- 4 787 193

## Beschreibung

Die vorliegende Erfindung betrifft eine Rundballenpresse für Erntegut mit einer Presskammer, die eine bewegliche Klappe zum Ausgeben eines in der Presskammer aus dem Erntegut geformten Ballens aufweist, mit einem Hüllmaterialspender zum Zuführen einer Hüllmaterialbahn zum Umhüllen eines fertigen Ballens in die Presskammer und einem Messer, das von einer Bereitschaftsstellung in eine Endstellung bewegbar ist, um eine Bahn des Füllmaterials zwischen dem Spender und der Presskammer zu durchtrennen und so die Ausgabe des fertig umhüllten Ballens aus der Presse zu ermöglichen. Eine solche Rundballenpresse ist z. B. aus DE 3418681 bekannt.

DE 195 482 71 A1 beschreibt eine Rundballenpresse mit einem zum Auswerfen eines fertigen Ballens aufklappbaren Gehäuse, wobei zum Antreiben der Klappbewegung ein Stellmittel in Form einer hydraulischen Kolbenzylindereinheit vorgesehen ist.

Es ist möglich ein eigenes Stellmittel zum Bewegen des Messers einzusparen, indem dessen Rückstellbewegungen in die Bereitschaftsstellung, in der es zum Durchtrennen der Hüllmaterialbahnen bereit ist, an die Öffnungs- und/oder Schließbewegung der Klappe gekoppelt wird. Dies ist eine ökonomische Lösung, solange der Wickelvorgang ordnungsgemäß funktioniert. Wenn jedoch Probleme beim Umwickeln der Ballen auftreten, z.B., weil sich das Füllmaterial um eine Walze statt um den Ballen gewickelt hat, oder sich die Umwicklung als nicht ausreichend fest erweist, um den Ballen zusammenzuhalten, kann es erforderlich sein, einen zweiten Schneidvorgang auszulösen, ohne dass vorher der Ballen ausgeworfen werden kann. Dies bedeutet, dass die Klappe geschlossen bleiben muss und die Kopplung der Messerrückstellung an die Klappenbewegung nicht genutzt werden kann, um das Messer zurück in die Bereitschaftsstellung zu bringen. Ein Benutzer muss daher von Hand auf das Messer zugreifen, um es in die Bereitschaftsstellung zurück zu befördern. Da die Presskammer nicht aufgeklappt werden kann, ohne dass das Pressgut herausfällt, ist der Zugriff auf das Messer schwierig, und es besteht die Gefahr, dass der Benutzer sich bei dem Versuch, das Messer zurückzustellen, verletzt.

Aufgabe der vorliegenden Erfindung ist, eine Rundballenpresse der Eingangs genannten Art anzugeben, bei der das Messer mit einfachen Mitteln in die Bereitschaftsstellung rückstellbar ist, ohne dass hierfür ein Öffnen der Ballenausgabenklappe erforderlich ist, und ohne dass für einen Benutzer Verletzungsgefahr besteht.

Die Aufgabe wird durch die Merkmale des Anspruchs 1 gelöst. So ist es je nach Zustand des Unterbrechers wahlweise möglich, durch Beaufschlagen der Leitung mit Antriebsenergie nur das Messer zurückzustellen oder gleichzeitig mit der Rückstellung des Messers die Klappe zu öffnen und den fertigen Ballen auszuwerfen.

Vorzugsweise ist die Leitung eine Hydraulikleitung und der Unterbrecher ein Wegeventil.

Das Stellmittel des Messers sollte durch Zufuhr der Antriebsenergie zweckmäßigerweise in zwei entgegengesetzte Richtungen antreibbar sein, wobei das Messer von einer Bewegung des Stellgliedes in eine erste der zwei Richtungen in die Bereitschaftsstellung mitgenommen wird.

Das Stellglied kann auch dazu dienen, das Messer in die zweite, entgegengesetzte Richtung mitzunehmen, d. h. die Schneidbewegung des Messers anzutreiben. Insbesondere wenn die Leitung eine Hydraulikleitung ist, ist es jedoch bevorzugt, zum Antreiben der Schneidbewegung einen Energiespeicher wie etwa eine Feder vorzusehen, der die zum Durchtrennen der Bahn erforderliche Bewegungsenergie des Messers in kürzerer Zeit bereitzustellen vermag.

Insbesondere in einem solchen Fall ist vorzugsweise das Stellmittel in die zweite Richtung bewegbar, während sich das Messer in der Bereitschaftsstellung befindet, damit das Stellmittel die Schneidbewegung des Messers nicht behindert.

Zum lösbaren Verrasten des Messers in der Bereitschaftsstellung kann ein Rastmittel wie etwa eine Fallklinke oder dergleichen vorgesehen sein.

Der Unterbrecher ist vorzugsweise durch ein der Rundballenpresse von außen zugeführtes Signal ferngesteuert. Dies ermöglicht es z. B. dem Fahrer eines Traktors, an den die Rundballenpresse angekoppelt ist, die Rückstellbewegung des Messers vom Fahrersitz aus auszulösen.

Weitere Merkmale und Vorteile der Erfindung werden deutlich anhand der nachfolgenden Beschreibung von Ausführungsbeispielen unter Bezugnahme auf die beigefügten Figuren. Es zeigen:
Fig. 1 die erfindungsgemäße Rundballenpresse in einer schematischen Seitenansicht; und
Fig. 2 einen Teil des Hydrauliksystems der Ballenpresse.

Mit 1 ist eine Rundballenpresse bezeichnet, die einen feststehenden und einen aufklappbaren Gehäuseteil 2 bzw. 3 aufweist. Eine Kolbenzylindereinheit 4 zum Antreiben einer Klappbewegung des hinteren, beweglichen Gehäuseteils 3 ist an beiden Seiten des Gehäuses angeordnet und jeweils gelenkig mit beiden Gehäuseteilen 2, 3 verbunden.

Eine an sich bekannte Pickup-Einrichtung 5 dient zum Aufnehmen von zu pressendem Erntegut vom Erdboden und Einspeisen des Ernteguts in einen Zuführkanal 6, von wo es über ein Schneidwerk 7 in eine Presskammer 8 im Inneren des Gehäuses der Ballenpresse 1 gelangt. Die Presskammer 8 ist begrenzt durch ein Endlosband 9, das auf Walzen 10, 11, 12, 13, 14 umläuft. Die Walzen 11, 13 sind an einem schwenkbaren Arm 15 gehalten und weichen im Laufe eines Ballenpressvorgangs aus ihrer in der Fig. strichpunktiert dargestellten Stellung in die durchgezogen dargestellte Stellung in dem Maße zurück, wie der Umfang des in der Kammer entstehenden Ballens 16 zunimmt.

Eine Vorratsrolle 17 für eine Materialbahn 18 zum Umwickeln des Ballens 16, z. B. aus Kunststofffolie oder einem Netzmaterial, ist in einer Wanne 19 an der in Fahrtrichtung vorderen Seite des festen Gehäuseteils 2 aufgenommen. Von dort ist die Materialbahn 18 über Walzen 20 und einen Schneidspalt 21 zu einem Einführtrichter 22 geführt, der einerseits durch das um die Walze 10 laufende Endlosband 9 und andererseits durch ein um die Walze 10 herumgeführtes Führungsblech 23 begrenzt ist. Wenn der Ballen 16 die vorgesehene Größe erreicht hat, wird ein Paar der Walzen 20 angetrieben, um die Materialbahn 18 von der Vorwärtsrolle 17 abzuwickeln, und die abgewickelte Bahn 18 gelangt über den Einführtrichter 22 in die Presskammer 8, wo sie sich um den Ballen 16 herumlegt.

Der Schneidspalt 21 ist gebildet durch ein schwenkbar aufgehängtes Messer 24, das sich über die gesamte Breite der zugeführten Bahn 18 erstreckt, und eine als Amboss für das Messer 24 dienende ortsfeste Stange 25. In einer gestrichelt dargestellten Bereitschaftsposition ist das Messer von einer Fallklinke 26 gehalten und durch eine gespannte Feder 27 gegen die Stange 25 beaufschlagt. Um die Materialbahn 18 zu durchtrennen, wird die Fallklinke 26 gelöst, so dass das Messer 24 gegen die Stange 25 schlägt. Dabei fällt ein Schwenkarm 28, an dem das Messer 24 aufgehängt ist, in eine offene Gabel 29, die an einer vierten Stange einer zweiten Kolbenzylindereinheit 30 montiert ist. Diese Kolbenzylindereinheit 30 ist an dem Gehäuseteil 2 drehfest montiert.

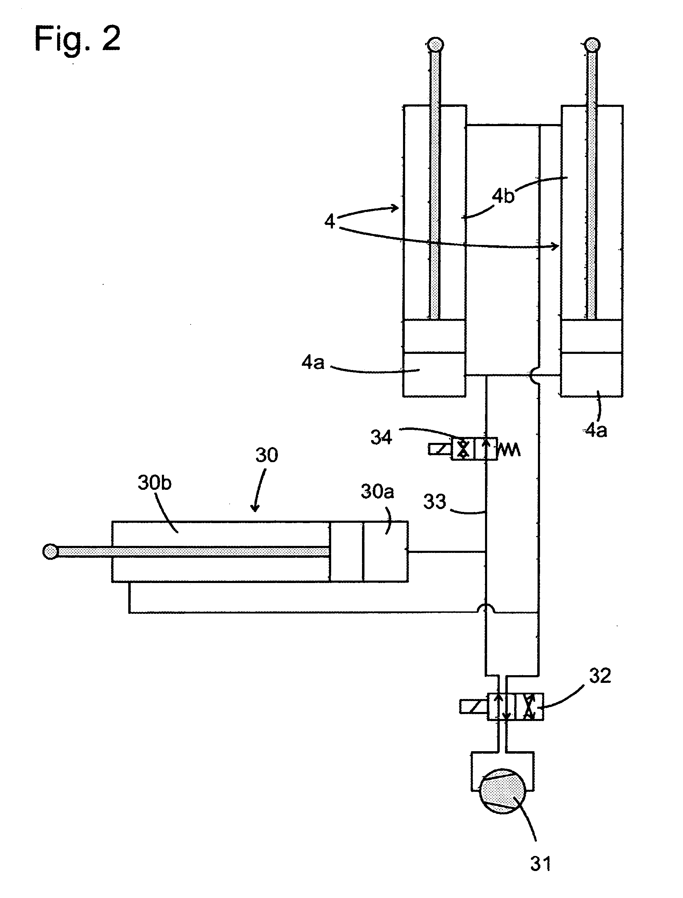

Die Kolbenzylindereinheiten 4, 30 sind Teil eines in Fig. 2 dargestellten Hydrauliksystems. Die Kolbenzylindereinheiten 4, 30 sind jeweils doppelt wirkend und werden von einer Pumpe 31 über ein Wegeventil 32 mit Hydraulikfluid versorgt. Die Kolbenzylindereinheit 30 ist unmittelbar an das Wegeventil 32 angeschlossen; in einer Leitung 33 zwischen einerseits den Kolbenzylindereinheiten 4 und andererseits der Pumpe 31 und der Kolbenzylindereinheit 30 befindet sich ein weiteres Wegeventil 34, das in der Lage ist, die Leitung 33 zu sperren. Die Pumpe 31, die Wegeventile 32, 34 und die Fallklinke 26 sind durch elektrische Steuersignale steuerbar, die über einen nicht dargestellten Steckverbinder zugeführt werden. An diesen Steckverbinder kann insbesondere eine Steuerkonsole angeschlossen sein, die am Führerstand eines Traktors angebracht ist, an den die Presse 1 angehängt ist. So kann ein Fahrer des Traktors die Kolbenzylindereinheiten steuern, ohne den Führerstand verlassen zu müssen.

In der in Fig. 2 gezeigten Konfiguration speist die Pumpe 31 jeweils Kammern 4a, 30a der Kolbenzylindereinheiten, so dass deren Kolbenstangen ausgefahren werden. Dies führt im Falle der Kolbenzylindereinheiten 4 zu einem Hochklappen des beweglichen Gehäuseteils 3, wodurch in an sich bekannter Weise der Ballen 16 ausgeworfen wird. Im Falle der Kolbenzylindereinheit 30 führt die Bewegung dazu, dass gegen die Kraft der Feder 27 das Messer 24 zurück in die Fallklinke 26 gedrückt wird.

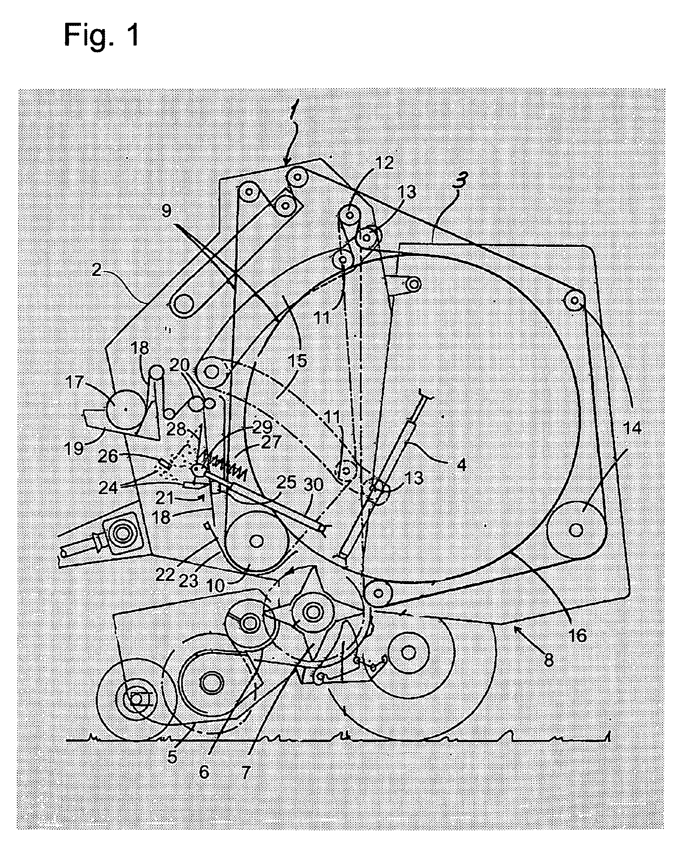

Wenn nun das Wegeventil 32 umgeschaltet wird, werden die jeweils anderen Kammern 4b, 30b mit Druckfluid versorgt. Dadurch kehrt sich die Bewegungsrichtung der Kolbenzylindereinheiten 4, 30 um, das Gehäuse klappt wieder zu, und die Gabel 29 kehrt in ihre in Fig. 1 mit durchgezogenen Linien dargestellte Stellung zurück, während das Messer 24, von der Fallklinke 26 zurückgehalten, in seiner gestrichelt dargestellten Bereitschaftsstellung bleibt. Das Messer 24 ist nun bereit, erneut ausgelöst zu werden.

Wenn ein Benutzer nach Betätigung des Messers 24 erkennt, dass der Wickelvorgang misslungen ist, sei es, weil die Bahn 18 sich um eine Walze an statt um den Ballen 16 geschlungen hat, oder weil der Ballen 16 noch nicht hinreichend fest umwickelt ist, hat er die Möglichkeit, das Wegeventil 34 in die Stellung zu bringen, in der es die Leitung 33 sperrt. Eine Betätigung der Pumpe 31 führt nun dazu, dass sich lediglich die Kolbenzylindereinheit 30 ausstreckt und dadurch das Messer in die Fallklinke 26 zurückdrückt; das Gehäuse der Ballenpresse 1 bleibt geschlossen. So kann ein erneuter Wickelvorgang durchgeführt werden, ohne dass der Benutzer unter Mühen versuchen muss, das Messer 24 zu erreichen und es gegen die Kraft der Feder 27 erneut zu spannen.

Fig. 2 zeigt eine Y-förmige Konfiguration der Leitung 33, mit drei an einer Verzweigungsstelle verbundenen Ästen, an deren Enden sich jeweils die Pumpe 31, die Kolbenzylindereinheit 4 bzw. die Kolbenzylindereinheit 30 befinden, wobei das Wegeventil 34 zwischen der Verzweigungsstelle und der Kolbenzylindereinheit 4 platziert ist. Selbstverständlich ist auch ein linearer Verlauf der Leitung 33 denkbar, bei dem die Kolbenzylindereinheiten 4, 30 jeweils an einem Ende der Leitung 33, die Pumpe 31 in einem zentralen Abschnitt der Leitung 33 und das Wegeventil 34 zwischen Pumpe 31 und Kolbenzylindereinheit 4 platziert ist, oder bei dem die Kolbenzylindereinheit 4 und die Pumpe 31 jeweils an einem Ende der Leitung 33, die Kolbenzylindereinheit 30 in einem zentralen Abschnitt der Leitung 33 und das Wegeventil 34 zwischen den Kolbenzylindereinheiten 4, 30 platziert ist.

### Bezugszeichen

- 1: Ballenpresse
- 2: Gehäuseteil
- 3: Gehäuseteil
- 4: Kolbenzylindereinheit
- 5: Pickup-Einrichtung
- 6: Zufuhrkanal
- 7: Schneidwerk
- 8: Presskammer
- 9: Endlosband
- 10: Walze
- 11: Walze
- 12: Walze
- 13: Walze
- 14: Walze
- 15: Arm
- 16: Ballen
- 17: Vorratsrolle
- 18: Materialbahn
- 19: Wanne
- 20: Walzen
- 21: Schneidspalt
- 22: Einführtrichter
- 23: Führungsblech
- 24: Messer
- 25: Stange
- 26: Fallklinke
- 27: Feder
- 28: Schwenkarm
- 29: Gabel
- 30: Kolbenzylindereinheit
- 31: Pumpe
- 32: Wegeventil
- 33: Leitung
- 34: Wegeventil

## Patentansprüche

1. Rundballenpresse mit einer Presskammer, die eine bewegliche Klappe (3) zum Ausgeben eines Ballens (16) aufweist, mit einem Hüllmaterialspender zum Zuführen von Hüllmaterial (18) zum Umhüllen eines fertigen Ballens (16) in die Presskammer und einem Messer (24), das von einer Bereitschaftsstellung in eine Endstellung bewegbar ist, um eine Bahn des Hüllmaterials (18) zwischen dem Spender und der Presskammer zu durchtrennen, und das gekoppelt an eine Betätigung der Klappe (3) in die Bereitschaftsstellung rückstellbar ist,
**dadurch gekennzeichnet, dass** dem Messer (24) und der Klappe (3) jeweils ein eigenes Stellmittel (30; 4) zugeordnet ist, die an eine gemeinsame Antriebsenergiequelle (31) über eine Leitung (33) angeschlossen sind, dass ein Unterbrecher (34) in der Leitung (33) angeordnet ist, und dass sich die Antriebsenergiequelle (31) und das Stellmittel (30) des Messers (24) auf einer Seite des Unterbrechers (34) und das Stellmittel (4) der Klappe (2) auf der anderen Seite des Unterbrechers (34) befinden, wobei die Leitung (33) mit Antriebsenergie beaufschlagbar ist, um je nach Zustand des Unterbrechers (34) wahlweise nur das Messer (24) zurückzustellen oder gleichzeitig mit der Rückstellung des Messers (24) die Klappe (3) zu öffnen und den fertigen Ballen (16) auszuwerfen.

2. Rundballenpresse nach Anspruch 1, **dadurch gekennzeichnet, dass** die Leitung (33) eine Hydraulikleitung und der Unterbrecher (34) ein Wegeventil ist.

3. Rundballenpresse nach Anspruch 1 oder 2, **dadurch gekennzeichnet, dass** das Stellmittel (30) des Messers (24) in zwei entgegengesetzte Richtungen antreibbar ist, wobei das Messer (24) von einer Bewegung des Stellgliedes (30) in eine erste der zwei Richtungen in die Bereitschaftsstellung mitgenommen wird.

4. Rundballenpresse nach Anspruch 3, **dadurch gekennzeichnet, dass** sie ein Rastmittel (26) zum lösbaren Verrasten des Messers (24) in der Bereitschaftsstellung aufweist.

5. Rundballenpresse nach Anspruch 3 oder 4, **dadurch gekennzeichnet, dass** das Stellmittel (30) in die zweite Richtung bewegbar ist, während das Messer (24) sich in der Bereitschaftsstellung befindet.

6. Rundballenpresse nach einem der vorhergehenden Ansprüche, **dadurch gekennzeichnet, dass** dem Messer (24) eine Feder (27) als ein Antriebsmittel zugeordnet ist.

7. Rundballenpresse nach einem der vorhergehenden Ansprüche, **dadurch gekennzeichnet, dass** der Unterbrecher (34) ferngesteuert ist.

## Claims

1. A round bale press comprising a pressing chamber which has a movable flap (3) for discharging a bale (16), a wrapping material dispenser for supplying wrapping material (18) for wrapping a finished bale (16) into the pressing chamber and a blade (24) movable from a readiness position into a final position to sever a web of the wrapping material (18) between the dispenser and the pressing chamber and which coupled to an actuating means of the flap (3) can be returned to the readiness position,
**characterised in that** associated with the blade (24) and the flap (3) is a respective dedicated actuating element (30; 4) which are connected to a common drive energy source (31) by way of a line (33), an interrupter (34) is arranged in the line (33), and the drive energy source (31) and the actuating means (30) of the blade are disposed on one side of the interrupter (34) and the actuating means (4) of the flap (3) is disposed on the other side of the interrupter (34), wherein the line (33) can be acted upon with drive energy in order depending on the respective condition of the interrupter (34) selectively to only return the blade (24) or simultaneously with the return of the blade (24) to open the flap (3) and eject the finished bale (16).

2. A round bale press according to claim 1 **characterised in that** the line (33) is a hydraulic line and the interrupter (34) is a directional control valve (34).

3. A round bale press according to claim 1 or claim 2 **characterised in that** the actuating means (30) of the blade (24) is drivable in two opposite directions, wherein the blade (24) is entrained by a movement of the actuating member (30) in a first of the two directions into the readiness position.

4. A round bale press according to claim 3 **characterised in that** it has a latching means (26) for releasably latching the blade (24) in the readiness position.

5. A round bale press according to claim 3 or claim 4 **characterised in that** the actuating means (30) is movable in the second direction while the blade (24) is in the readiness position.

6. A round bale press according to one of the preceding claims **characterised in that** a spring (27) is associated as a drive means with the blade (24).

7. A round bale press according to one of the preceding claims **characterised in that** the interrupter (34) is remotely controlled.

## Revendications

1. Presse à balles rondes comprenant une chambre de pressage qui présente un volet mobile (3) pour la sortie d'une balle (16), comprenant un distributeur de matériau d'enrubannage servant à amener dans la chambre de pressage un matériau d'enrubannage (18) prévu pour enrubanner une balle finie (16), et comprenant un couteau (24) qui peut être déplacé d'une position d'attente vers une position finale pour couper une bande du matériau d'enrubannage (18) entre le distributeur et la chambre de pressage et qui, de manière couplée à un actionnement du volet (3), peut être rappelé dans la position d'attente, **caractérisée en ce que** des moyens de commande propres (30 ; 4) sont associés respectivement au couteau (24) et au volet (3) et sont raccordés à une source d'énergie motrice commune (31) par une conduite (33), **en ce qu'**un dispositif interrupteur (34) est implanté sur la conduite (33), et **en ce que** la source d'énergie motrice (31) et le moyen de commande (30) du couteau (24) se trouvent d'un côté du dispositif interrupteur (34) et le moyen de commande (4) du volet (2) se trouve de l'autre côté du dispositif interrupteur (34), la conduite (33) pouvant être soumise à une énergie motrice pour, selon l'état du dispositif interrupteur (34), au choix seulement rappeler le couteau (24) ou simultanément rappeler le couteau (24), ouvrir le volet (3) et éjecter la balle finie (16).

2. Presse à balles rondes selon la revendication 1, **caractérisée en ce que** la conduite (33) est une conduite hydraulique et le dispositif interrupteur (34) est une vanne multivoies.

3. Presse à balles rondes selon la revendication 1 ou 2, **caractérisée en ce que** le moyen de commande (30) du couteau (24) peut être entraîné dans deux directions opposées, le couteau (24) étant, dans une première des deux directions, entraîné vers la position d'attente par un mouvement du moyen de commande (30).

4. Presse à balles rondes selon la revendication 3, **caractérisée en ce qu'**elle présente un moyen d'enclenchement (26) pour l'enclenchement libérable du couteau (24) dans la position d'attente.

5. Presse à balles rondes selon la revendication 3 ou 4, **caractérisée en ce que** le moyen de commande (30) peut être déplacé dans la deuxième direction pendant que le couteau (24) se trouve dans la position d'attente.

6. Presse à balles rondes selon une des revendications précédentes, **caractérisée en ce qu'**un ressort (27) est associé au couteau (24) en tant que moyen d'entraînement.

7. Presse à balles rondes selon une des revendications précédentes, **caractérisée en ce que** le dispositif interrupteur (34) est commandé à distance.
